## Europäisches Patentamt
## European Patent Office
## Office européen des brevets

(11) Veröffentlichungsnummer: **0 213 550 B1**

## EUROPÄISCHE PATENTSCHRIFT

(45) Veröffentlichungstag der Patentschrift:
07.11.90

(51) Int. Cl.⁵: **G06K 15/12, B41B 19/00**

(21) Anmeldenummer: **86111534.3**

(22) Anmeldetag: **20.08.86**

(54) Einrichtung zur Belichtung eines Aufzeichnungsträgers mit alphanumerischen Zeichen oder Flächen, die ein sich von einem Hintergrundmuster abhebendes Vordergrundmuster aufweisen.

(30) Priorität: **22.08.85 DE 3529964**

(43) Veröffentlichungstag der Anmeldung:
**11.03.87 Patentblatt 87/11**

(45) Bekanntmachung des Hinweises auf die Patenterteilung:
**07.11.90 Patentblatt 90/45**

(84) Benannte Vertragsstaaten:
**DE**

(56) Entgegenhaltungen:
**DE-A- 2 639 856**
**DE-A- 3 226 936**

(73) Patentinhaber: **Linotype AG, Mergenthaler Allee 55-75, D-6236 Eschborn(DE)**

(72) Erfinder: **Meinhardt, Ferdinand, Hauptstrasse 119, D-6231 Sulzbach(DE)**

(74) Vertreter: **Schubert, Siegmar, Dipl.-Ing. et al, Patentanwälte Dr. V. Schmied-Kowarzik Dr. P. Weinhold Dr.-Ing. G. Dannenberg Dr. D. Gudel Dipl.-Ing. S. Schubert Dr. P. Barz Grosse Eschenheimer Strasse 39, D-6000 Frankfurt am Main 1(DE)**

ACTORUM AG

**Beschreibung**

Die Erfindung betrifft eine Einrichtung zur Belichtung eines Aufzeichnungsträgers entsprechend alphanumerischen Zeichen oder Flächenmustern mittels eines intensitätsmodulierten Abtaststrahls nach dem Oberbegriff des Anspruchs 1.

In einer Reihe von graphischen Anwendungsfällen ist es gewünscht, Schriftzeichen oder alphanumerische Zeichen nicht nur, wie üblich, voll schwarz auf einem weißen Hintergrund oder mit einem umgekehrten Kontrast auf einem Aufzeichnungsträger zu belichten, auf dem die Schriftzeichen durch Abtasten entlang Abtastlinien, die insbesondere in Zeilenrichtung verlaufen, exponiert werden. Es sollen vielmehr insbesondere für Werbedrucksachen oder im Formularsatz Flächeneffekte auf dem belichteten Aufzeichnungsträger erzeugt werden, indem bestimmte Flächenanteile des belichteten Aufzeichnungsträgers mit kleinen regelmäßigen Strukturen ausgefüllt sind. Je nach Art dieser Strukturen kann es sich dabei um Raster, Schraffuren, Signaturen oder ähnliches handeln. Diese Strukturen werden im nachfolgenden generell als Muster bezeichnet.

Hierunter soll auch eine Halbtonsimulierung verstanden werden, bei der das Muster aus abstrakten graphischen Elementen, insbesondere kleinen Punkten besteht, deren Größe und Abstand unterhalb der Grenze liegen, an der sie von dem Auge des Betrachters zur Halbtonempfindung integriert werden. Auch zur Strukturierung können Muster mit abstrakten graphischen Elementen verwendet werden, deren Rasterweite dann so groß sein muß, daß die Strukturen wahrgenommen werden können.

Schließlich können die graphischen Elemente der Muster auch regelmäßig angeordnete Signaturen, z.B. Symbole in Landkarten, sein.

Bisher sind in der Regel derartige Muster unabhängig von dem typographischen Satz erzeugt und dann mit dem typographischen Satz zusammenkopiert worden. Diese Verarbeitung ist jedoch umständlich und erfordert große Sorgfalt.

Deswegen hat man bereits mit einer sogenannten direkten Belichtung eines Aufzeichnungsträgers mit alphanumerischen Zeichen oder Flächen versucht, zugleich ein Hintergrundmuster bzw. ein Vordergrundmuster zu belichten (Formularsatzsystem "Purup 4000").

Zum Stand der Technik gehört eine Einrichtung zum Bedrucken eines Aufzeichnungsträgers mit alphanumerischen Zeichen oder mit Flächenmustern mit einem Punktmatrixdrucker (DE-A 3 226 936), die zwei verschiedene Signalquellen zur Steuerung des Punktmatrixdruckers aufweist. Die beiden verschiedenen Signalquellen bestehen aus einer Generatorschaltung zur Erzeugung eines Schriftzeichenmustersignals in Abhängigkeit von einem codierten Zeichensignal sowie aus einer zweiten Generatorschaltung zur Erzeugung eines Hintergrundmustersignals. Durch eine Schaltungseinheit, die als ODER-Glied realisiert ist, kann das Schriftzeichenmustersignal mit dem Hintergrundmustersignal kombiniert werden. Um die Möglichkeit einer Auswahl eines gewünschten von mehreren zur Verfügung stehenden Hintergrundmustern dem Benutzer zu bieten, kann das gewünschte Hintergrundmuster vom Bediener mit Hilfe einer Tastatur eingegeben werden, damit eine Zentraleinheit das gewählte Hintergrundmuster durch ein ROM festlegt und die Abgabe des Hintergrundsignals durchgeschaltet wird. - Diese bekannte Steuerschaltung ist jedoch nicht geeignet, von einem Vordergrundmuster auf ein Hintergrundmuster und umgekehrt an jeweils einer Schriftzeichengrenze selbsttätig umzuschalten und für bestimmte Abschnitte der Darstellung nicht nur ein ausgewähltes einer Vielzahl von Hintergrundmustern, sondern auch ein ausgewähltes einer Vielzahl von Vordergrundmustern zur Darstellung zu bringen, ohne hierfür eine große Informationsmenge zur Steuerung der Auswahl der verschiedenen zur Verfügung stehenden Muster zu benötigen.

Im wesentlichen die gleichen Nachteile gelten für eine bekannte Überlagerungs-Aufzeichnungsvorrichtung, die mit einem Laserabtaster aufgebaut ist und einen ersten Punktsignalgenerator für eine erste codierte Aufzeichnungsinformation, insbesondere in Form von Schriftzeichen, einen zweiten Punktsignalgenerator für eine zweite codierte Aufzeichnungsinformation, insbesondere eines Formularsatzes sowie eine Aufzeichnungssignalformvorrichtung für das Verbinden der von dem ersten und dem zweiten Punktsignalgenerator abgegebenen Punktsignale zur Bildung von Aufzeichnungssignalen aufweist (DE-A 2 639 856). Dabei kann ein Formularinformationssystem zwei unterschiedliche Formulargeneratoren aufweisen, von denen einer ein Mustergenerator ist, in welchem Formularmuster vorgespeichert sind, während der andere ein variabler Mustergenerator ist, der das Auslesen und Speichern der Muster aus einem zweiten Speichermedium erlaubt. Die Steuerung des ersten Mustergenertors und des variablen Mustergenerators sowie des Zeichengenerators erfolgt in Abhängigkeit von einem Abtastzeilenzähler. Die Ausgangssignale des Zeichengenerators einerseits sowie des ersten Mustergenerators und des zweiten, variablen Mustergenerators gelangen über je ein Schieberegister und einen Schalter auf ein ODER-Glied zur Steuerung des Modulators des Laserabtasters. - Mit dem Zeichengenerator werden keine unterschiedlichen Vordergrund- oder Hintergrundmuster dargestellt, sondern nur die Grenzen der Schriftzeichen definiert, innerhalb deren eine einheitliche Punktdarstellung erfolgt. Gleiches gilt für die beiden Mustergeneratoren, die ebenfalls nur Grenzen der Formularmuster definieren. Es treten keine Vordergrund- und Hintergrundsignale auf, die unterschiedliche Muster innerhalb der genannten Grenzen repräsentieren. Eine Vorauswahl je eines Paares Vordergrundsignale und Hintergrundsignale für jeden Abschnitt einer Abtastlinie ist nicht vorgesehen. Es ist nicht ersichtlich, wie mit dieser bekannten Überlagerungsaufzeichnungsvorrichtung unterschiedliche Vordergrund- und Hintergrundmuster in Abhängigkeit von der Abtastlinienposition mit einer geringen Datenrate erzeugt werden sollen.

In jüngster Zeit ist weiterhin bekannt geworden, einen typographischen Laserbelichter so weiterzubilden, daß er Raster und Hintergrundmuster belichten kann. Insbesondere sollen mit dem Laserbelichter technische Raster, wie Grauflächen in Formularen, Tabellen, Preislisten, Prospekten usw. in unterschiedlicher Form und verschiedenen Tonstufen dargestellt werden. Hierzu sind Hardware-Rastergeneratoren vorgesehen, die mit entsprechenden Mustern geladen, die vor der Aufzeichnung (Belichtung) durch die Software berechnet und während der Belichtung regelmäßig wiederholt werden. Die bei der Texterfassung durch einen Bediener definierten Parameter für Rastertype, prozentuale Flächendeckung, Rasterweite und Optimierungsfunktion werden automatisch in einem der Rastergeneratoren abgelegt; sie steuern im Zusammenhang mit den Daten für bestimmte Flächengrößen, X- und Y-Positionen und die Darstellungsart (Schrift positiv, negativ oder gerastert auf Vollton- oder Rasterflächen), die Aufzeichnung. Dabei besteht jeder Rasterpunkt aus Mikroelementen, Pixels (Belichtungssystem mit Raster und Hintergrundmuster "Linotronic 300"-Presseinformation).

Ein Problem bei der Ausführung eines solchen Belichtungssystems mit Raster und Hintergrundmuster besteht darin, daß sehr viele unterschiedliche Muster für eine vielseitige Anwendung bereitzustellen sind, von denen einige während der linienmäßigen Abtastung des Aufzeichnungsträgers durch den Abtaststrahl zu dessen Intensitätsmodulation heranzuziehen sind. Dabei ist zu berücksichtigen, daß an jeder Zeichengrenze, d.h im Übergang von dem Hintergrundmuster eines alphanumerischen Zeichens zu dessen innerem Vordergrundmuster ein Wechsel des Musters auftritt. Im Falle einer herkömmlichen Schwarzweißdarstellung der alphanumerischen Zeichen braucht bei diesem Wechsel des Musters nur von einem Schwarz- auf einen Weißpegel einer statischen Signalquelle oder umgekehrt der Abtasterstrahlmodulator umgeschaltet zu werden, was mit einem Bit erfolgen kann. Stehen mehrere Signalquellen einschließlich Rastergeneratoren zur Erzeugung unterschiedlicher Muster zur Auswahl, so ist es naheliegend, den Modulatorumschalter, der den Abtaststrahlmodulator an jedem Durchstoßpunkt, d.h. einer Grenze eines alphanumerischen Zeichens oder einer Fläche mit einer der verschiedenen Signalquellen verbindet, entsprechend der Anzahl der Signalquellen zu erweitern. Da im Verlaufe einer Abtastlinie, die von dem Abtaststrahl überstrichen wird, in der Regel viele Durchstoßpunkte abzutasten sind, bedingt die Steuerung eines solchen erweiterten Modulatorumschalters die Generierung, Übertragung und Verarbeitung einer hohen Datenrate (Datenmenge pro Zeiteinheit), welche die aufeinanderfolgenden Durchstoßpunkte darstellen, indem die Durchstoßpunkte eine Position auf der Abtastlinie beinhalten, bei der eine Umschaltung des Modulatorumschalters erfolgen soll, sowie dasjenige der Vielzahl zur Auswahl stehender Muster bezeichnen soll, mit dessen Vordergrundmustersignalen oder Hintergrundmustersignalen der Abtaststrahlmodulator über den nächsten Abtastlinienabschnitt zu beaufschlagen ist.

Der vorliegenden Erfindung liegt daher die Aufgabe zugrunde, eine Einrichtung zur Belichtung eines Aufzeichnungsträgers entsprechend alphanumerischen Zeichen oder Flächen, die ein sich von einem Hintergrundmuster abhebendes Vordergrundmuster aufweisen, so auszubilden, daß die Datenrate, bzw. die Informationsmenge, die zur Steuerung der Auswahl der verschiedenen zur Verfügung stehenden Muster an jedem Durchstoßpunkt des Zeichens bzw. der Fläche in einer Abtastlinie zu erzeugen, zu übertragen und zu verarbeiten ist, herabzusetzen. Damit soll bei gegebenem Aufwand die Abtastgeschwindigkeit erhöht werden, indem die die Modulation des Abtaststrahls bewirkenden ausgewählten Vordergrundmustersignale und Hintergrundmustersignale in Echtzeit zur Verfügung gestellt werden.

Diese Aufgabe wird durch die Ausbildung der Einrichtung mit den in dem Anspruch 1 angegebenen Merkmalen gelöst.

Die Erfindung beruht auf dem Prinzip, daß der Modulatorumschalter nicht an jedem Durchstoßpunkt des alphanumerischen Zeichens oder der Fläche in dem Verlaufe einer Abtastlinie eine Auswahl zwischen sämtlichen zur Verfügung stehenden Rastergeneratoren zu treffen hat, sondern daß für durch einen Bediener definierte Abtastlinienabschnitte, die in einer Eingabeeinrichtung eingegeben werden, mit einer Vorauswahlsteuerlogik für jeden Abtastlinienabschnitt eine Vorauswahl wenigstens je eines Rastergenerators für das Vordergrundmuster und wenigstens je eines Rastergenerators für das Hintergrundmuster getroffen und für den jeweiligen Abtastlinienabschnitt beibehalten wird. Zu jeder Aktivierung dieses wenigstens je eines Rastergenerators, der das für einen Abtastlinienabschnitt definierte Hintergrundmuster erzeugt, und wenigstens je eines Rastergenerators, welcher für diesen Abtastlinienabschnitt das gewünschte Vordergrundmuster generiert, mit einer Vorauswahlsteuerlogik müssen zwar steuernde Daten gebildet, übertragen und verarbeitet werden, die entsprechend der Anzahl der zur Verfügung stehenden Rastergeneratoren bzw. Muster eine große Anzahl Bit aufweisen. Diese steuernden Datenmengen sind jedoch entsprechend dem relativ großen Abständen der Abtastlinienabschnitte relativ selten erforderlich. Die Daten, die zur Umschaltung des Modulatorumschalters an den Zeichengrenzen - unabhängig von den Abtastlinienabschnitten - benötigt werden, brauchen außer der Lage des Durchstoßpunktes auf der Abtastlinie wiederum nur mit je einem Bit die Lage eines Modulatorumschalters zwischen zwei Stellungen vorzugeben, wobei in einer Stellung der Modulatorumschalter mit dem vorausgewählten Rastergenerator des Vordergrundmusters und in einer anderen Schalterstellung mit einem vorausgewählten Rastergenerator des Hintergrundmusters in Verbindung steht. Wenn ein Abtastlinienabschnitt gleich der Abtastlinienlänge gewählt, d.h. während des Abtastens einer ganzen Abtastlinie die Hintergrundmustersignale und die Vordergrundmustersignale von je einer Signalquelle zu dem Abtaststrahlmodulator zu leiten sind, entfällt jede Datenerzeugung und Verarbeitung zur Steuerung der statisch eingestellten Vorauswahlsteuerlogik für die Zeit dieser Abtastung. Es sind nur die Daten zur Steuerung des Modulatorumschalters wie bei einer konventionellen Schwarz/Weiß-Intensitätsmodulation des Abtaststrahlers zu bilden.

Wenn die Abtastlinienabschnitte kleiner als die Länge einer Abtastlinie gewählt sind, wird zweckmäßig nach Anspruch 3 die Vorauswahlsteuerlogik synchron zu aufeinanderfolgenden Übergängen zwischen Abtastlinienabschnitten während des Abtastens selbsttätig umgesteuert. Die die Vorauswahlsteuerlogik steuernden Daten, die jeweils einen großen Informationsgehalt aufweisen, aber relativ selten auftreten, werden im folgenden auch als Mu-sterdurchstoßpunktdaten bezeichnet, im Unter-schied zu Zeichendurchstoßpunktdaten, die an den Grenzen der alphanumerischen Zeichen oder Flächen die Umschaltlogik des Abtaststrahlmodulators unabhängig von der Vorauswahl der Signalquelle steuern.

Die Vorauswahlsteuerlogik kann in eine Ausführungsform der Erfindung direkt in die Struktur der Rastergeneratoren eingreifen, um diese zu aktivieren. Dies geschieht über je eine Steuerlogik, die Bestandteil je einer Rastervideosignalquelle ist, nach Anspruch 6. Der Aufwand für diese Ausführungsform ist bei solchen Rastervideosignalquellen vor allem dann relativ klein, wenn diese individuelle Steuerlogik zugleich für weitere Steuerungsaufgaben, und zwar in Verbindung mit der Auswahl bestimmter Musterparameter wie der akuellen Rasterweite in X- und Y-Richtung vorgesehen ist: Anspruch 7. Außerdem kann bei diesem Konzept die Einrichtung verhältnismäßig einfach mit zusätzlichen Rastergeneratoren erweitert werden, die sich für ein Vordergrundmuster oder Hintergrundmuster vorauswählen lassen.

Allgemeiner können weitgehend beliebige Rastergeneratoren mit der Vorauswahlsteuerlogik zur Auswahl eines Musters für den Hintergrund und zur Auswahl eines Musters für den Vordergrund bei einem Abtastlinienabschnitt aktiviert werden, wenn die Vorauswahlsteuerlogik nach Anspruch 2 mindestens je einen Vorauswahlschalter der Vordergrundmuster und mindestens je einen Vorauswahlschaler der Hintergrundmuster betätigt, die mit selbständigen Rastergeneratoren verbunden sind. Insbesondere können diese Vorauswahlschalter zwischen den Rastergeneratoren und dem Modulatorumschalter angeordnet sein.

Vorteilhafte Ausgestaltungen der Einrichtung gehen aus den weiteren Unteransprüchen hervor.

Insbesondere sind nach Anspruch 8 als Rastergeneratoren nicht nur ständig mit den Vorauswahl verbundene interne Rastervideosignalquellen als Rastergeneratoren vorgesehen, die mit Daten von Mustern geladen sind, sondern es können auch externe an die Vorauswahlschalter der Einrichtung anschließbare Rastergeneratoren graphischer Son-dereinrichtungen (Plotter) mitbenutzt werden. Au-ßerdem können auch statische Generatoren für Schwarz- und Weißpegel vorausgewählt werden. Damit lassen sich die Vorteile des Zugriffs zu einer Vielzahl unterschiedlicher Muster bei hoher Abtastgeschwindigkeit ausschöpfen.

Die Erfindung wird im folgenden anhand einer Zeichnung mit vier Figuren erläutert. Es zeigen

Fig. 1 die Einrichtung als Bestandteil eines elek-tronischen Setzgeräts als vereinfachtes Block-schaltbild,

Fig. 2A einen Teil der Vorauswahlsteuerlogik,

Fig. 2B eine Rastervideosignalquelle und

Fig. 3 eine Darstellung des zeitlichen Verlaufs der die Einrichtung steuernden Daten.

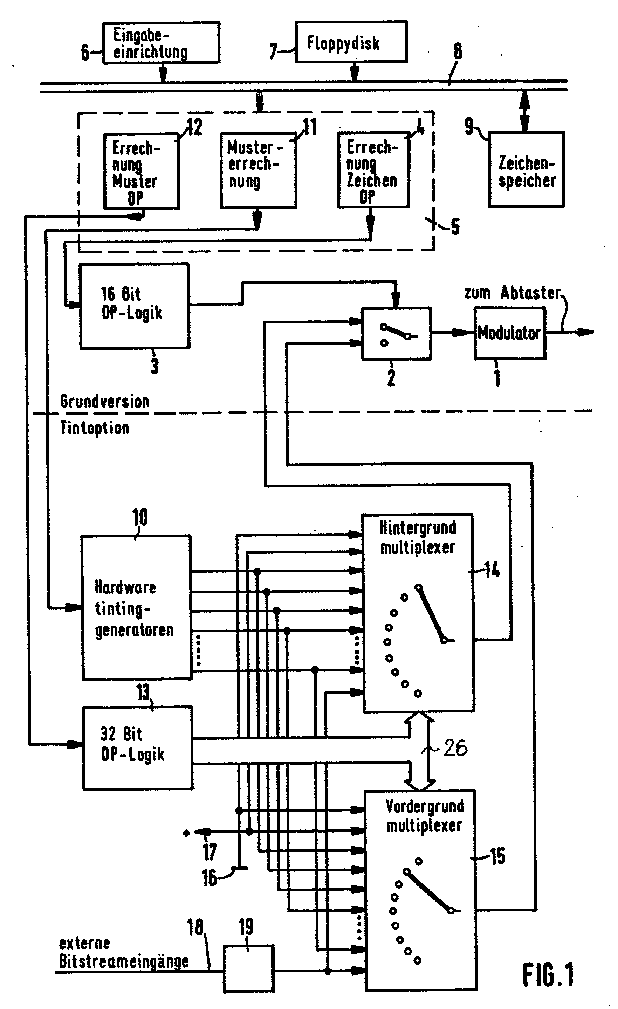

In Fig. 1 ist mit 1 ein Abtaststrahlmodulator bezeichnet, der einen Abtaststrahl, insbesondere einen Laserstrahl, in einem nicht dargestellten Laser-abtaster intensitätsmoduliert. Der Abtaststrahlmo-dulator ist durch einen Modulatorumschalter 2, der zwei Schaltstellungen einnehmen kann und elektronisch ansteuerbar ist, umschaltbar. Der Modulatorumschalter wird durch eine Umschaltlogik 3 betätigt. In die Umschaltlogik werden steuernde Daten als Digitalzahl mit 16 Bit eingespeist, die die Position von Durchstoßpunkten an den Zeichengrenzen im Verlauf einer Abtastlinie beinhalten, sowie die Stellung des Modulatorumschalters bezogen auf den zuge-hörigen Zeichendurchstoßpunkt. Die Zeichendurch-stoßpunkte werden in einem Teil 4 eines elektronischen Rechners 5 errechnet. Die Berechnung erfolgt nach Maßgabe der entlang einer zugeordneten Abtastlinie auftretenden Durchstoßpunkte der alphanumerischen Zeichen, die durch aufeinander-folgende nebeneinanderliegende Abtastlinien abzu-bilden sind. Hierzu werden die Größe, die Art und der Abstand der Zeichen in der Abtastlinie in dem Rechner berücksichtigt. Die Steuerdaten für die aufeinanderfolgenden Zeichen können durch eine manuelle Eingabeeinrichtung 6 oder durch eine Floppy Disk Station 7 über einen Bus 8 in den Rechner 5 eingespeist werden. Die Daten der Umrißlinien der ausgewählten alphanumerischen Zeichen können zur Errechnung der Durchstoßpunkte der Zeichen aus einem Zeichenspeicher 9 ausgelesen werden. Die Errechnung der Durchstoßpunkte der Zeichen in einer Abtastlinie ist konventionell.

Durch die Eingabeeinrichtung 6 kann weiterhin festgelegt werden, welche Vordergrund- und Hintergrundmuster während Abtastlinienabschnitten zu belichten sind. Die Rasterlinienabschnitte wer-den durch Rechteckkoordinaten definiert. Zu-nächst werden in aufladbare Rastervideosignal-quellen 10 Daten der Muster aus einem Teil 11 des Rechners 5 geladen. Entsprechend den mit der Eingabeeinrichtung 6 in den Rechner eingespeisten Rechteckkoordinaten der Muster werden in einem Teil 12 des Rechners Daten der Musterdurchstoßpunkte als Digitalzahlen mit 32 Bit errechnet. Die Digitalzahlen geben mit 15 Bit die Position auf der Abtastlinie an, in der eine Definition der Vordergrundmuster und der Hintergrundmuster gelten soll. Mit den restlichen Bits wird die Art der Muster definiert, d.h. derjenige Rastergenerator, der während des betreffenden Abtastlinienabschnitts die Vordergrundmustersignale abgeben soll, und derjenige Rastergenerator, der während des gleichen Abtastlinienabschnitts die Hintergrundmustersignale generieren soll.

Der Rechner 5 ist ein übliches Mikroprozessor System mit einer CPU (zentralen Rechenwerk-Einheit), einem Systemspeicher, Schnittstellen zu Eingang, Ausgang und Speichereinheiten wie Floppy Disk-Antrieben, sowie mit einem Bus-System und einer Stromversorgung. Die Module 4, 11, 12 sind Software Module, die auf diesem Mikroprozessor laufen.

Die errechneten Digitalzahlen der Musterdurchstoßpunkte werden in eine Vorauswahlsteuerlogik 13 eingespeist. Die Vorauswahlsteuerlogik 13 steuert die Schaltstellung je eines elektronischen Multiplexers 14 für das Hintergrundmuster und je eines elektronischen Multiplexers 15 für das Vordergrundmuster. Die elektronischen Multiplexer stellen die Vorauswahlschalter dar. Sie haben parallele Eingänge für sämtliche Signalquelle und je einen Ausgang, der mit je einem Umschaltkontakt des Modulatorumschalters in Verbindung steht. - In einer tatsächlichen Ausführung sind die Multiplexer nicht in einen Signalflußweg zwischen Ausgängen der Signalquellen, insbesondere Rastervideosignalquellen 10, und den Umschaltkontakten des Modulatorumschalters 2 eingefügt, sondern sie veranlassen, daß von den vorbereiteten Rastergeneratoren je ein Rastergenerator die Vordergrundmustersignale an den Modulatorumschalter abgibt, und ein anderer ausgewählter Rastergenerator die Hintergrundmustersignale in den Modulatorumschalter einspeist. Die Vorder- und Hintergrundmustersignale sind Pixelströme in Form modulierter Videosignale.

Die Multiplexer 14 und 15 schalten nicht nur die Rastervideosignalquellen 10, sondern auch statische Generatoren für Schwarz- und Weißpegel 16, 17 sowie - über eine Schnittstelle 19 - einen Rasterdatenkanal, an dem eine externe graphische Einrichtung angeschlossen ist, auf den Modulatorumschalter 2, wenn die Multiplexer 14, 15 in entsprechende Vorauswahlstellungen durch die Vorauswahlsteuerlogik 13 eingestellt sind.

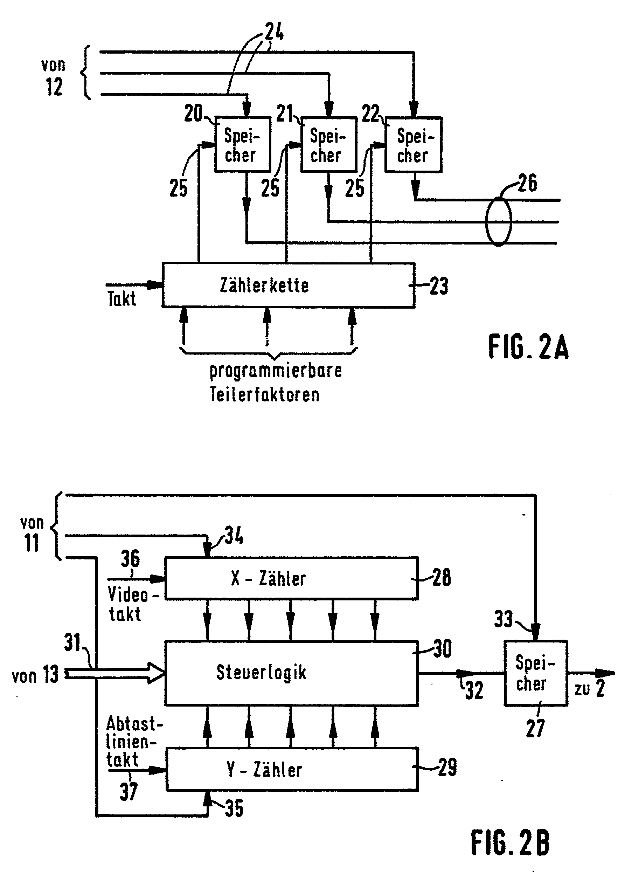

In Fig. 2A ist ein Teil der Vorauswahlsteuerlogik gezeigt, der einem Rastergenerator zugeordnet ist, d.h. diesen zur Abgabe eines modulierten Videosignals aktivieren kann. Dieser Teil umfaßt Speicherbausteine 20 - 22, deren Adresseingänge 25 von einer Zählerkette 23 ansteuerbar sind. Der Teilerfaktor der Zählerkette ist über Teilereingänge programmierbar. Ausgänge 26 der Speicherbausteine sind zu den Multiplexern 14, 15 bzw. zu einem Schaltungsteil je einer der in Fig. 2B gezeigten Rastervideosignalquellen geführt, welcher einem Teil der Multiplexer entspricht. - In die Speicherbausteine werden die Daten der Musterdurchstoßpunkte insbesondere als Digitalzahlen mit 32 Bit aus dem Teil 12 des Rechners vor Beginn des Abtastens einer Abtastlinie eingespeichert und im Verlaufe des Abtastens der Abtastlinie werden serienmäßig von den Ausgängen 26 Vorauswahlsteuersignale auf die Multiplexer 14, 15 bzw. entsprechende Teile der Rastervideosignalquellen 10 abgegeben. Der innere Ablauf der Vorauswahlsteuerlogik wird durch die einstellbare Zählerkette 23 gesteuert, die mit einem von der Videofrequenz abgeleiteten Taktsignal getaktet wird.

In Fig. 2B ist eine ladbare Rastervideosignalquelle dargestellt. Sie umfaßt im wesentlichen neben Speichern 27 einen X-Zähler 28 und einen Y-Zähler 29, die eine Steuerlogik 30 steuern, die von der Vorauswahlsteuerlogik an einem Eingang 31 gesteuert wird. Die Speicher der Videosignalquelle sind als schnelle statische Speicher ausgelegt, weil sie mit der Videofrequenz ausgelesen werden. Die Speicher können über Adressleitungen 25 der Steuerlogik adressiert und über Speichereingänge 33 von dem Teil 11 des Rechners zur Mustererrechnung und einer Bitkombination geladen werden, die das kleinste gemeinsame Vielfache eines sich in X- und Y-Richtung wiederholenden Musters darstellt. Zählereingänge 34, 35 werden ebenfalls von dem Teil 11 zur Mustererrechnung mit Musterinformationen voreingestellt, und zwar der Zählereingang 34 mit der aktuellen Rasterweite in X-Richtung und der Zählereingang 35 mit der aktuellen Rasterweite in Y-Richtung. Ein Takteingang 36 des X-Zählers wird mit dem Videotakt getaktet und ein Takteingang 37 des Y-Zählers mit einem Takt, der in einer Logik des Rechners 5 zur abtastlinienweisen Fortschaltung u.a. des Y-Zählers 29 gebildet wird.

Zum Laden der Rastervideosignalquellen wird ein Job (Setzaufgabe) vor dem Setzen nach Mustern durchsucht. Wenn das Muster ermittelt ist, werden die Rastervideosignalquellen durch den Teil 11 des Rechners 5 für die Mustererrechnung, wie voranstehend zu der Rastervideosignalquelle in Fig. 2B erläutert, geladen Anschließend werden die X- und Y-Zähler während der Abtastung des Aufzeichnungsträgers ständig durchgezählt, auch wenn die Speicher 27 das Videosignal des Abtastens nicht modulieren sollen. Die Steuerlogik 30 bestimmt dabei, ob in Abhängigkeit von den Musterdurchstoßpunkten in der Vorauswahlsteuerlogik 26 der betreffende Videosignalgenerator das Videosignal moduliert oder nicht. Die Steuerlogik beeinflußt außerdem das Muster in X- und Y-Richtung durch die Abfolge des kleinsten Vielfachen des Musters in den Speichern 27. Die Musterdurchstoßpunkte, mit deren Daten die Vorauswahlsteuerlogik 13 beaufschlagt wird, werden zuvor in dem Teil 12 des Rechners 5 errechnet und in die Vorauswahlsteuerlogik eingespeist.

Während des Abtastens des Aufzeichnungsträgers werden ein moduliertes Videosignal für ein Hintergrundmuster durch Aktivierung eines oder mehrerer Generatoren, insbesondere Rastervideosignalquellen, erzeugt und gleichzeitig ein moduliertes Videosignal für ein Vordergrundmuster, entsprechend der Steuerung durch die Steuerlogik 30 jeder der Signalquellen. Die Vielzahl der Steuerlogiken bilden damit die Vorauswahlschalter bzw. Multiplexer 14, 15 für das Vordergrund- und Hintergrundmuster. Durch die Videosignalvorauswahllogik in Verbindung mit den Signalquellen, insbesondere den mit Fig. 2B dargestellten Rastervideosignalquellen kann ein Musterdurchstoßpunkt-Datum mit 32 Bit ab jeder beliebigen Position auf der Abtastlinie die Vordergrundmustersignale und die Hintergrundmustersignale umdefinieren.

Die Zeichendurchstoßpunkte, deren Daten in die Umschaltsteuerlogik 3 einlaufen, bestimmen, ob die gerade vorgewähle Vordergrundebene oder die gerade vorgewählte Hintergrundebene den Abtaststrahl moduliert, also zur Belichtung gelangt.

Die derart vorausgewählten modulierten Videosignale werden mit dem Modulatorumschalter 2 zu dem Abtaststrahlmodulator umgeschaltet, je nachdem, ob zwischen benachbarten Zeichen- oder Flächengrenzen ein definiertes Hintergrund- oder Vordergrundmuster abzutasten ist.

Die Rastervideosignalquellen 10 erzeugen eine Anzahl unterschiedlicher Mustersignale, die sowohl Vordergrundmustersignale als auch Hintergrundmustersignale je nach der Stellung der Multiplexer 14, 15 bzw. der entsprechenden Steuerlogik-Einheiten 30 darstellen können, in mehreren Ebenen, die (virtuell) gleichzeitig parallel zur Verfügung stehen. Im einzelnen sind das
- eine über das gesamte Format des Satzprodukts (Outputformat) weiße Ebene
- eine über das gesamte Outputformat schwarze Ebene - eine Anzahl von Ebenen, die sich wiederholende kleine Musterzellen beinhalten
- eine Ebene, deren Wirkung auf das Satzprodukt durch extern über den Rasterdatenkanal 18 einzuspeisende Videosignale bestimmt wird (Plottermode).

Damit wird eine große Variabilität der Satzprodukte ermöglicht, ohne einen zu hohen Aufwand durch Berechnung einzelner Musterdurchstoßpunktdaten zu verursachen.

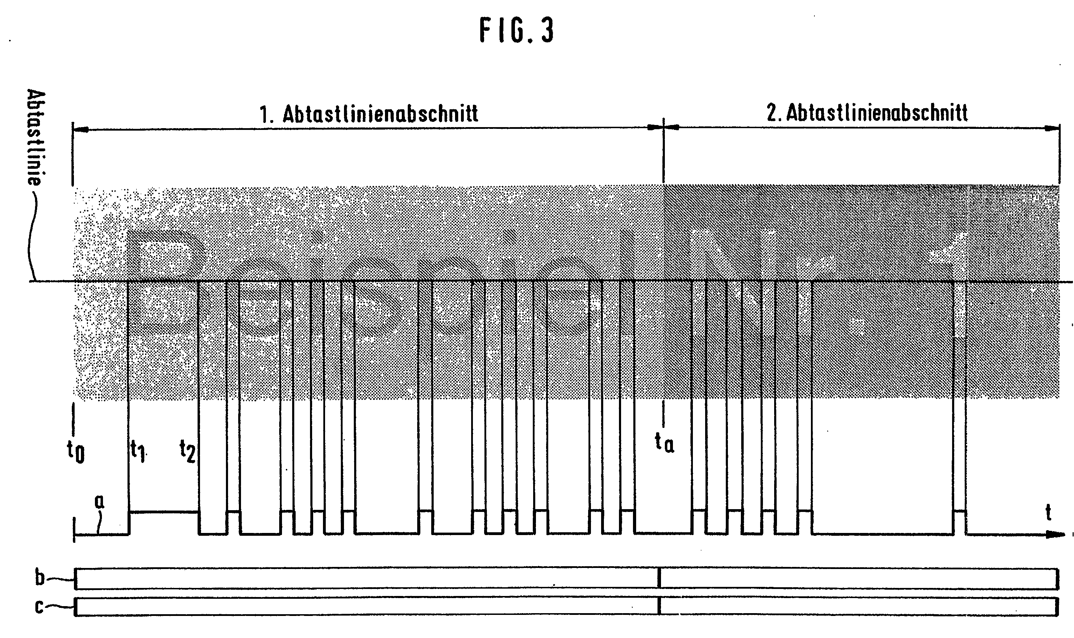

In Fig. 3 sind der zeitliche Verlauf der Schalterstellung des Modulatorumschalters - Linie a -, der Vorauswahlstellung des Multiplexers 14 für den Hintergrund - Band b - sowie der Vorauswahlstellung des Multiplexers 15 für den Vordergrund - Band c - dargestellt. Es sind zeitlich zwei Abtastlinienabschnitte der Abtastlinie vorgesehen. Zu dem Zeitpunkt $t_0$ zu Beginn des ersten Abtastlinienabschnitts ist der Multiplexer 14 in eine Stellung zur Auswahl eines Hintergrundmustersignals aus n Mustersignalen eingestellt, die mit den Rastervideosignalquellen 10 zur Verfügung gestellt werden. Die Hintergrundmustersignale ergeben ein verhältnismäßig helles Muster. Der Multiplexer 15 ist zu dem Zeitpunkt $t_0$ auf eine andere Rastervideosignalquelle der Rastervideosignalquellen 10 eingestellt, die Vordergrundmustersignale abgibt, welche ein verhältnismäßig dunkles Muster in dem Satzprodukt ergeben. Der Modulatorumschalter 2 nimmt von $t_0$ bis $t_1$ eine erste Lage ein, in der er die Hintergrundmustersignale zu dem Abtaststrahlmodulator weiterleitet. Ab $t_1$ bis $t_2$ führt er hingegen die Vordergrundmustersignale der Vordergrundebene zu dem Abtaststrahlmodulator. Die Umschaltung des Modulatorumschalters erfordert dabei jedesmal nur 1 Bit Information. Zu dem Zeitpunkt $t_a$ ist der erste Abtastlinienabschnitt belichtet und es werden die Multiplexer 14 und 15 durch die Musterstoßpunktdaten an dieser Stelle bzw. zu diesem Zeitpunkt in neue Vorauswahlstellungen umgeschaltet, in denen Hintergrundmustersignale, die einen verhältnismäßig dunklen Hintergrund bei Belichtung ergeben, sowie Vordergrundmustersignale, die einen verhältnismäßig hellen Vordergrund durch Intensitätsmodulation des Abtaststrahls bewirken, an dem Modulatorumschalter 2 anliegen. Die Umschaltung des Modulatorumschalters erfolgt während des zweiten Abtastlinienabschnitts grundsätzlich in der gleichen Weise wie während des ersten Abtastlinienabschnitts.

Mit anderen Worten, die Umschaltsteuerlogik für den Modulatorumschalter verarbeitet eine verhältnismäßig niedrige Datenrate zur Umschaltung bei jeder Zeichengrenze, während die Vorauswahlsteuerlogik nur für die Grenzen der Abtastlinienabschnitte eine verhältnismäßig viele Datenrate verarbeitet, um die Muster der Vordergrundebene und der Hintergrundebene zu definieren.

## Patentansprüche

1. Einrichtung zur Belichtung eines Aufzeichnungsträgers entsprechend alphanumerischen Zeichen oder Flächenmustern mittels eines intensitätsmodulierten Abtaststrahls, der entlang Abtastlinien über den Aufzeichnungsträger insbesondere in Zeilenrichtung bewegt wird, mit einer Umschaltsteuerlogik (3), die den Abtaststrahl an den Zeichengrenzen umschaltet und zwei verschiedene Signalquellen (14, 15) zu einem Abtaststrahlmodulator durchschaltet, sowie mit Rastergeneratoren, die mit Daten einer Anzahl von einstellbaren Flächenmustern ladbar sind, dadurch gekennzeichnet, daß die beiden Signalquellen (14, 15) Vordergrundsignale und Hintergrundsignale entsprechend der Stellung eines Umschalters (2) abgeben, daß eine Vorauswahlsteuerlogik (13) für jede Signalquelle codierte Daten (von 12) empfängt und speichert, die jeweils einen Rastergenerator aus einer Vielzahl von Rastergeneratoren (10) für jede der beiden Signalquellen auswählen und die Position der Aktivierung dieser insgesamt zwei Rastergeneratoren innerhalb einer Abtastlinie festlegen, und daß ein Geber (23) der jeweils aktuellen Position innerhalb der Abtastlinie die Vorauswahlsteuerlogik zur Aktivierung der Rastergeneratoren in den beiden Signalquellen entsprechend des gespeicherten Codes steuert.

2. Einrichtung nach Anspruch nach Anspruch 1, dadurch gekennzeichnet, daß mindestens je ein Vorauswahlschalter (15) der Vordergrundmuster und ein Vorauswahlschalter (14) der Hintergrundmuster mit der Vielzahl von Rastergeneratoren (10), die parallel zueinander zur Abgabe von Vordergrundmustersignalen und Hintergrundmustersignalen vorbereitet sind, verbunden sind und mit der Vorauswahlsteuerlogik (13) steuerbar sind, die auf die Beibehaltung eines Vorauswahlsteuerzustands über willkürlich wählbare Abtastlinienabschnitte einstellbar ist.

3. Einrichtung nach Anspruch 1, **dadurch gekennzeichnet**, daß die Vorauswahlsteuerlogik (13) synchron zu aufeinanderfolgenden Übergängen zwischen Abtastlinienabschnitten (Fig. 3) selbsttätig umsteuerbar ist.

4. Einrichtung nach Anspruch 2, **dadurch gekennzeichnet**, daß die Vorauswahlschalter durch die Vorauswahlsteuerlogik (13) synchron zu aufeinanderfolgenden Übergängen zwischen Abtastlinienabschnitten (Fig. 3) selbsttätig umsteuerbar sind.

5. Einrichtung nach Anspruch 1 oder 2, **dadurch gekennzeichnet**, daß die Vorauswahlsteuerlogik (13) über einen Rechner (5) mit einer Bediener-Eingabeeinrichtung (6) in Verbindung steht.

6. Einrichtung nach Anspruch 1 oder 2, **dadurch gekennzeichnet**, daß Speicher (27), in denen eine Information eines Muster gespeichert ist, sowie eine mit der Vorauswahlsteuerlogik (13) in Verbindung stehende Steuerlogik (30) vorgesehen sind, durch die der Speicher zur Ausgabe eines mit dem Muster modulierten Videosignals aktivierbar ist.

7. Einrichtung nach Anspruch 6, **dadurch gekennzeichnet**, daß die Steuerlogik (30) zusätzlich durch einen X-Zähler (28) und einen Y-Zähler (29) steuerbar ist, die auf eine aktuelle Rasterweite in X-Richtung des Aufzeichnungsträgers bzw. auf eine aktuelle Rasterweite in Y-Richtung des Aufzeichnungsträgers voreinstellbar sind und mit einem Videotakt (X-Richtung) bzw. einem Takt der Fortschaltung der Abtastlinien (Y-Richtung) getaktet sind.

8. Einrichtung nach Anspruch 2, **dadurch gekennzeichnet**, daß ständig mit den Vorauswahlschaltern (14, 15) verbundene interne Rastervideosignalgeneratoren (10) und statische Signalquellen für Schwarz- und Weißpegel, sowie eine externe, an die Vorauswahlschalter der Einrichtung anschließbare Signalquelle (an 18) vorgesehen sind.

**Claims**

1. An apparatus for exposing a recording carrier corresponding to alphanumerical characters or background patterns by means of an intensity-modulated scanning beam moved along scanning lines above said recording carrier particularly in the direction of the lines, comprising a switch-over control logic (3) switching over the scanning beam at the character border and connecting two different signal sources (14, 15) through to a scanning beam modulator, as well as raster generators which can be loaded with data of a number of adjustable background patterns, characterized in that said two signal sources (14, 15) generate foreground signals and background signals corresponding to the position of a switch (2), that a preselection control logic (13) receives, and stores, coded data (from 12) for each signal source, which data select one raster generator each from a plurality of raster generators (10) for each of said two signal sources and fix the position of the activation of these two raster generators within one scanning line, and that a source (23) of the respective actual position within the scanning line controls said preselection control logic for the activation of said raster generators in said two signal sources corresponding to the stored codes.

2. An apparatus according to claim 1, characterized in that at least one preselection switch (15) each of said foreground patterns and one preselection switch (14) of said background patterns are connected with said plurality of raster generators (10) arranged in parallel relative to one another for the generation of foreground pattern signals and background pattern signals and may be controlled by said preselection control logic (13) which may be adjusted to the maintenance of a preselection control state along arbitrarily selectable scanning line sections.

3. An apparatus according to claim 1, characterized in that said preselection control logic (13) is automatically changeable in synchronism with subsequent transitions between scanning line sections (Fig. 3).

4. An apparatus according to claim 2, characterized in that said preselection switches are automatically reversible by said preselection control logic (13) in synchronism with subsequent transitions between scanning line sections (Fig. 3).

5. An apparatus according to claim 1 or 2, characterized in that said preselection control logic (13) is connected via a computer (5) with an operator input device (6).

6. An apparatus according to claim 1 or 2, characterhized in that the raster video signal generator comprises storages (27), in which an information of a pattern is stored, as well as a control logic (30) connected with said preselection control logic (13) by which control logic said storage can be activated for the generation of a video signal modulated with the pattern.

7. An apparatus according to claim 6, characterized in that said control logic (30) is additionally controllable by an X counter (28) and a Y counter (29) which are selectable to an actual raster width in the X direction of said recording carrier or to an actual raster width in the Y direction of said recording carrier, respectively, and are clocked by a video pulse (X direction) or a pulse of the step by step action of the scanning lines (Y direction).

8. An apparatus according to claim 2, characterized in that internal raster video signal generators (10) constantly connected to said preselection switches (14, 15), static signal generators for black and white levels, and an external signal source connectable to said signal source (to 18) are provided.

**Revendications**

1. Dispositif pour exposer un support d'enregistrement ou de tracés de manière correspondant à des signes alphanumériques ou à des formes, au moyen d'un rayon explorateur modulé en intensité qui est déplacé le long de lignes de balayage sur le support d'enregistrement ou de tracés, notamment dans la direction des lignes, comportant une logique de commande de commutation (3) qui commute le rayon de balayage aux limites du dessin et met deux sources de signaux différentes (14, 15) en communication avec un modulateur de rayon de balayage, et comportant des générateurs de trame qui peuvent être chargés avec des données d'une pluralité de formes, caractérisé par le fait que les deux sources de signaux (14, 15) délivrent des signaux d'avant-plan et des signaux d'arrière-plan en fonction de la position d'un commutateur (2), par le fait qu'une logique de commande de présélection (13) reçoit et stocke des données codées (venant de 12) pour chaque source de signaux, lesquelles données sélectionnent à chaque fois un générateur de trame parmi une pluralité de générateurs de trame (10) pour chacune des deux sources de signaux et déterminent la position de l'activation de ces générateurs de trame, deux au total, à l'intérieur d'une ligne de balayage, et par le fait qu'un transmetteur (23) de la position actuelle concernée à l'intérieur de la ligne de balayage commande la logique de commande de présélection pour l'activation des générateurs de trame dans les deux sources de signaux, en fonction du code mémorisé.

2. Dispositif selon revendication 1, caractérisé par le fait qu'au moins un présélecteur (15) des formes d'avant-plan et un présélecteur (14) des formes d'arrière-plan sont reliés à la pluralité de générateurs de trame (10) qui sont préparés en parallèle pour délivrer des signaux de tracés d'avant-plan et des signaux tracés d'arrière-plan, et peuvent être commandés par la logique de présélection (13), laquelle est réglable sur la conservation d'un état de commande de présélection sur des portions de ligne d'exploration pouvant être choisies arbitrairement.

3. Dispositif selon revendication 1, caractérisé par le fait que la logique de présélection (13) est commutable par commande automatique, entre portions de ligne d'exploration (figure 3), en synchronisme avec des transitions successives.

4. Dispositif selon revendication 2, caractérisé par le fait que les présélecteurs peuvent être commutés par commande automatique, par la logique de présélection (13), entre des portions de ligne d'exploration (figure 3), cela en synchronisme avec des transitions successives.

5. Dispositif selon revendication 1 ou 2, caractérisé par le fait que la logique de présélection (13) est en communication, par l'intermédiaire d'un calculateur (5), avec un dispositif (6) pour l'introduction de données par un opérateur.

6. Dispositif selon revendication 1 ou 2, caractérisé par le fait qu'il est prévu des mémoires (27) dans lesquelles est mémorisée une information d'une forme, ainsi qu'une logique de commande (30) se trouvant en communication avec la logique de présélection (13), par lesquelles la mémoire peut être activée pour l'émission d'un signal vidéo modulé par la forme.

7. Dispositif selon revendication 6, caractérisé par le fait que la logique de commande (30) peut être commandée en plus par un compteur en X (28) et par un compteur en Y (29) lesquels peuvent être préréglés sur une largeur actuelle de trame dans la direction des X du support d'enregistrement ou de tracés, et respectivement sur une largeur actuelle de trame suivant la direction des Y du support d'enregistrement ou de tracés, et sont rythmés respectivement par un rythme vidéo (direction des X) et par un rythme de progression des lignes de balayage (direction des Y).

8. Dispositif selon revendication 2, caractérisé par le fait qu'il est prévu des générateurs internes (10) de signaux de trame vidéo, constamment reliés aux présélecteurs (14, 15), et des générateurs de signaux statiques pour des niveaux de noir et de blanc, ainsi qu'une source de signaux (en 18) externe, apte à être raccordée au présélecteur du dispositif.

FIG.1

FIG. 2A

FIG. 2B

# FIG. 3

Abtastlinie

1. Abtastlinienabschnitt  2. Abtastlinienabschnitt

$t_0$  $t_1$  $t_2$  $t_a$

a

t

b

c

EP 0 213 550 B1